# EUROPEAN PATENT SPECIFICATION

(11) **EP 0 425 632 B1**
(45) Date of publication and mention of the grant of the patent: **25.08.1993**
(21) Application number: 90907086.4
(22) Date of filing: 18.05.1990
(51) Int. Cl.: B60P 1/43, B60P 1/64, B60S 9/10

(54) **TRAILER SUPPORT LEGS**
STÜTZE FÜR ANHÄNGER
PIEDS DE SUPPORT POUR REMORQUE

(30) Priority: 19.05.1989 FI 892419
(43) Date of publication of application: 08.05.1991
(73) Proprietor: RAUTARUUKKI OY, 90101 Oulu (FI)
(72) Inventor: HEIKKINEN, Jaakko, SF-90820 Kello (FI); HUTTUNEN, Markku, SF-90840 Haukipudas (FI)
(74) Representative: Reinhard - Skuhra - Weise & Partner
(86) International application number: FI9000138
(87) International publication number: WO9014246

(56) References cited:
- WO-A-88/02707
- GB-A- 1 450 337
- GB-A- 1 473 328

## Description

The present invention relates to the trailer support legs defined in the introductory section of the patent claim 1, which are known from WO-A1-8802707.

There are several trailer constructions where the rear part of the trailer is supported against the legs, and the bogie or similar wheel assembly is removed for the duration of the loading process, and the rear end of the trailer is lowered down. Such trailer constructions are described for instance in the Finnish patent publications 57,718 and 77,187, and in the US Patent publication 3,303,950. These trailers are provided with vertically lowerable jacks for supporting the rear end of the trailer, and for lowering down and raising up the rear supported by them.

The problem with the known trailers is that the conditions in which the load is shifted to the support of the trailer are not sufficiently taken into account, and the same applies particularly to the requirements for the supporting legs. It is pointed out that for instance while loading a seafreight container which is remarkably heavier than the trailer itself, it is advantageous to leave the trailer brakes in neutral gear, and to allow - at least at the beginning of the shifting process - the trailer to move in under the load. Thus it is advantageous that the trailer is free to move on the ground, for instance supported by the wheels or rollers provided at the rear end of the trailer.

It is also pointed out that any unevenness of the loading area, or the pressing of the rear end of the trailer against the ground, should not prevent the above described shifting of the trailer to under the load. One solution to this problem is to provide the rear end of the trailer with several wheels for surpassing the obstacles. However, the height of the rear end of the trailer must not become a treshold for the load which is transferred to the support of the trailer by means of the loading equipment provided in connection with the trailer. Consequently, only relatively low rollers or small wheels can be placed at the rear end of the trailer.

In the Finnish patent publication 76,966, the supporting legs of the trailer are provided with wheels. The problem with this arrangement, however, is that while the rear end of the trailer is lowered down, these wheels remain far from the rear end of the trailer, and consequently cannot roll the rear end over the bulges and/or other uneven features existing in the ground.

In order to solve the above described problems and to achieve the said aims, there are developed new trailer support legs according to the present invention. The trailer legs of the present invention are characterized by the novel freatures enlisted in the patent claim 1.

The trailer support legs of the invention comprise two elongate leg members, which are attached to the rear end of the trailer so that each leg is at its high position at least roughly parallel to the lengthwise axis of the trailer, and that each leg member is turnable around a horizontal axis perpendicular to the vehicle longitudinal axis by means of a turning device such as a pressure fluid cylinder and supported at its articulation points, from the high position closely below the surface of the trailer chassis, to the low position against the ground or other underlaying surface, in order to raise and lower the rear end of the trailer, and which leg members are provided with wheel assemblies. According to the invention, each leg member is fastened, at its articulation point, at such a distance from the rear end of the trailer which roughly corresponds to the total length of the leg member, in which case the free end of the leg member, together with the wheel assembly, is in the high position located in the immediate vicinity of the rear end of the trailer.

In a preferred embodiment of the trailer support legs, each leg member is arranged in the bevelled part of the rear end of the trailer.

In another preferred embodiment of the trailer legs, the turning device of the legs, particularly a pressure fluid cylinder, is located in the trailer, on the opposite side of the articulation point with respect to the leg member.

In a preferred embodiment of the trailer legs, the second articulation point of the pressure fluid cylinder, which point is connected to the supporting legs, is located at a distance from the articulation point of the leg members and above it while the leg members are in the high position.

In yet another preferred embodiment of the trailer legs, the distance between the articulation points is essentially shorter than the total length of the leg member.

In another preferred embodiment of the trailer legs, each pressure fluid cylinder and leg member are in the high position located successively and in a position at least roughly parallel.

In another preferred embodiment of the trailer legs, the free end of each leg member is in the high position arranged to be supported against the trailer

In yet another preferred embodiment of the trailer legs, the rear end of the trailer is provided with supporting members, against which each leg member is arranged to rest in the high position.

In another preferred embodiment of the trailer legs, at each free end of the leg member, there is turnably attached a bogie.

In another preferred embodiment of the trailer legs, the wheels of the bogie are at least partly located outside the bottom of the trailer chassis while the leg members are in the high position.

An advantage of the invention is that the wheels or corresponding members provided at the free ends of the supporting legs serve in the high position as gear wheels in connection with the rear end of the trailer, and particularly in connection with the rear beam, by means of which gear wheels the shifting of the trailer to under the load can be easily carried out.

Another advantage of the invention is that any sinking to the ground of the wheels, provided in the support legs, during the loading can be compensated by raising the rear end of the trailer, supported by the legs, gradually as the loading proceeds, and if necessary, one leg can be raised more than the other.

Another advantage of the invention is that the supporting legs of the trailer fit in a limited, relatively small space.

Another advantage of the invention is that the power units, such as pressure fluid cylinders, are located in connection with the supporting legs so that there is created a large torque at the beginning of the lifting motion of the trailer, while raising the trailer and the load thereon.

Yet another advantage of the invention is that in structure the pressure fluid cylinders of the trailer are ordinary, easily available and economical in price.

Moreover, due to the invention the pressure fluid cylinders connected to the supporting legs are protected by the chassis of the trailer, so that they are not susceptible to damage.

Furthermore, due to the invention the rear end of the trailer is formed as a compact and simple unit.

Moreover, the invention enables the shifting of the trailer by means of the bogies both in the high and low positions of the supporting legs.

In the following the invention is described in more detail with reference to the appended drawings, where
figure 1 illustrates a vehicle-trailer combination, where the trailer legs conform to that of the present invention;
figure 2 illustrates the vehicle-trailer combination of figure 1, at the loading stage;
figure 3 illustrates the rear end of the trailer, seen from the side and provided with the legs of the invention;
figure 4 respectively illustrates the rear end of the trailer, seen from the top and reduced in scale as compared to figure 3.

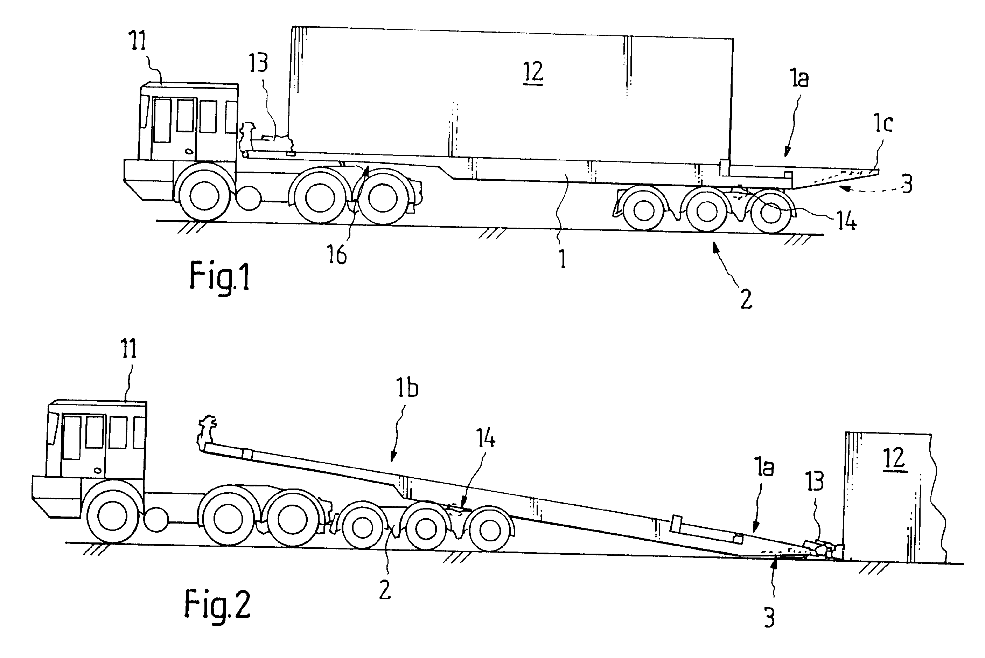

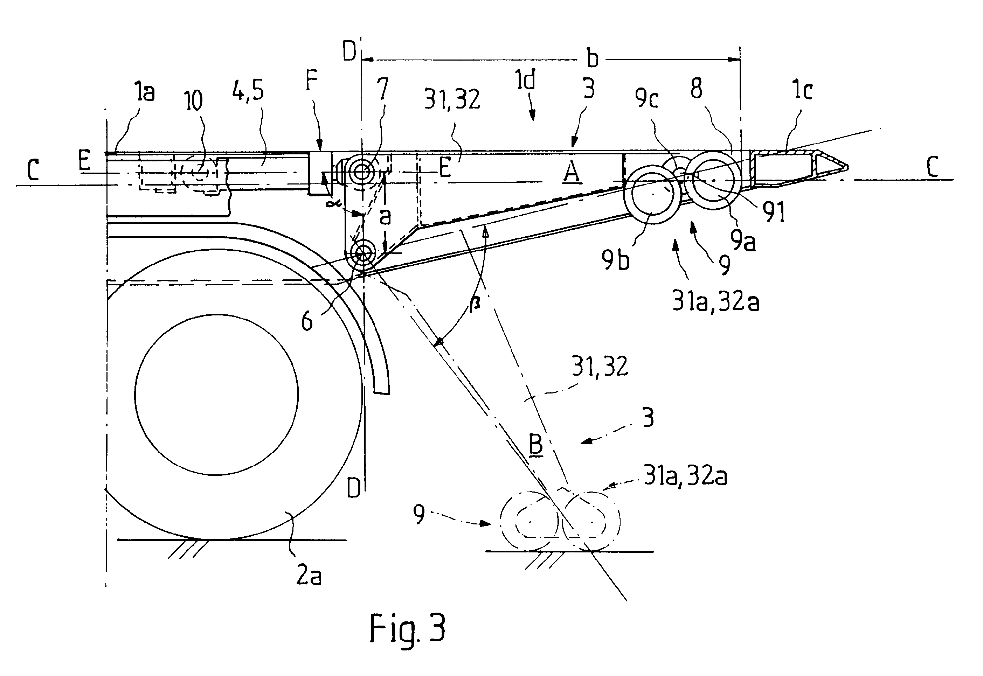

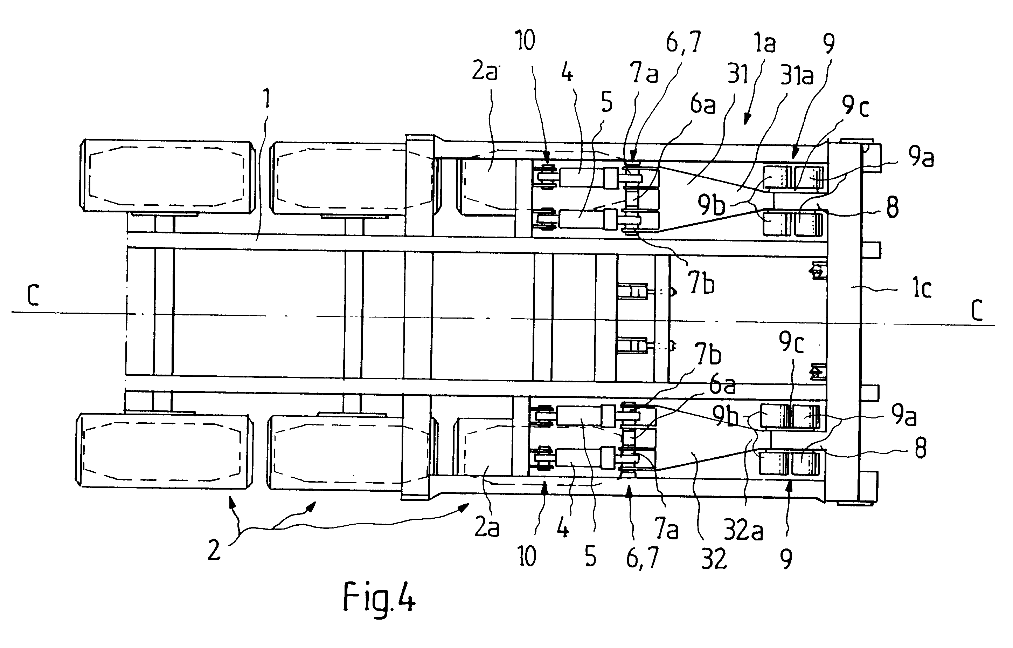

Figure 1 illustrates a semi-trailer 1 connected to a vehicle, i.e. a tractor 11. The said trailer 1 conforms to the present invention and comprises a bogie 2, which in this case includes three axis assemblies; a device 14 for shifting the bogie 2 from the first end, or the rear end 1a of the trailer 1 to the second end, i.e. the front end 1b thereof; supporting legs 3, including two elongate leg members 31, 32 (figures 3 and 4), which are fastened to the rear end 1a of the trailer so that they are turnable, supported at their articulation points 6, from the high position A in the vicinity of the trailer chassis to the low position B, against the ground or other underlaying surface, in order to lower and raise the rear end of the trailer; turning device for turning the support legs; and a device 13 for shifting the load, such as a container 12, to the support of the trailer 1 while the trailer is being loaded, and away from the support of the trailer 1, while the trailer is being unloaded.

The supporting legs 3 of the trailer include two elongate leg members 31, 32. The turning device comprises two hydraulic cylinders 4, 5, one for each leg member 31, 32. Each leg member 31, 32 is fitted and fastened to the side of the trailer 1, behind the rearmost wheels 2a of the bogie 2. Each leg member 31, 32 is either separately or simultaneously turnable with respect to its articulation point 6, such as the fastening axis 6a (figure 4) from the high position A in the vicinity of the trailer chassis to the low position B against the ground or other underlaying surface (marked with dotted lines in figure 3) in order to lift the trailer to the support of the legs. Correspondingly, the supporting legs 3 are turnable in the opposite direction when it is desired to move the trailer 1 from the support of the legs 3 to the support of the bogie 2.

The hydraulic cylinders 4, 5 are fastened, when seen from the side, to each leg member 31, 32 at the point 7, and to the chassis of the trailer 1 at the point 10. The hydraulic cylinders 4, 5 are turnably fastened at the articulation point 7, by means of the turning axes 7a, 7b, to the leg members 31, 32. The articulation point 7 of the hydraulic cylinders 4, 5 and the leg members 31, 32, and respectively the articulation point 6 of the leg members 31, 32 and the chassis of the trailer 1, are in figure 3 arranged at a distance a from each other wheen seen from the side of the trailer. The line D-D passing via the articulation points 6, 7 is at least roughly vertical to the main longitudinal axis of the leg members, which axis in figure 3 is in the high position A of the leg members parallel to the longitudinal axis C-C of the trailer.

The distance a between the articulation points 6, 7 is essentially shorter than the total length b of the leg member. In the embodiment of the drawings, the ratio of the distance a to the length of the leg member 31, 32 is about 1:3. It can, however, vary between 1:5...1:2. Other ratios are also possible.

The hydraulic cylinders 4, 5 are attempted to be chosen as short as possible and to be adjusted in connection with the leg members 31, 32 and the chassis of the trailer 1, so that the torque directed to the leg member 31, 32 is as great as possible and evenly distributed throughout the whole turning range from the high position A to the low position B.

The angle α, described in the embodiment of figure 3, located in between the longitudinal axis E-E of the hydraulic cylinders 4, 5 and the line D-D passing via the articulation points 6, 7 is roughly 90°. Thus, by means of the hydraulic cylinders 4, 5, the leg member 31, 32 is affected with a torque as large as possible through the lever arm formed in between the articulation points 6, 7, the length whereof in the high position A is a, particularly in a situation where the rear end 1a of the trailer rests against the ground. When the container is shifted to the support of the trailer, the rear end 1a of the trailer is raised, by means of the leg members 31, 32, off the ground, and the bogie 2 is shifted to under the rear end of the trailer.

The hydraulic cylinders 4, 5, and the leg member 31, 32 are located, in the longitudinal direction C-C of the trailer 1, on different sides of the line D-D passing via the said articulation points 6, 7. It is, however, possible to locate the cylinders 4, 5 both on the side of the leg member 31, 32. But in that case the functions of the articulation points must be exchanged. Otherwise the cylinders 4, 5 must be operated in an opposite working order.

The hydraulic cylinders 4, 5 of the apparatus, and the leg member 31, 32 are in the high position A located successively and in a roughly parallel direction, as is seen from figure 3, and in such a position that the free end 31a, 32a of the leg member is directed towards the rear end 1a of the trailer 1. Moreover, the free end 31a, 32a of each leg member 31, 32 is in the high position A placed in the immediate vicinity of the rear edge of the trailer chassis, in this case in the immediate vicinity of the rear beam 1c. Thus one elongate side of the leg member 31, 32 comes in the high position near to the top level F of the chassis structure. If the rear end 1a of the trailer chassis is bevelled, so that it becomes narrower in the vertical direction towards the rear beam 1c, each leg member 31, 32 can be matched to this bevelled part 1d at the rear of the trailer.

The free end 31a, 32a of each leg member 31, 32 is in the high position A arranged to be supported against the rear of the trailer. In figures 3 and 4, the rear beam 1c in the rear of the trailer is provided with supporting members such as brackets 8, against which the leg member, particularly its free end 31a, 32a, rests in the high position A.

At the free end 31a, 32a of each leg member there is fastened a bogie 9. The bogie 9 is turnably fastened to the leg member so that at least in the turning direction A-B of the leg member 31, 32 the bogie is free to move and thus to be supported against the ground at the various position angles β of the leg member 31, 32.

The bogie 9 of the leg member 3 is advantageously formed of two wheel pairs 9a, 9b which are attached to a bogie support 9c. The said bogie support 9c is in turn turnably attached to the free end 31a, 32a of the leg member 31, 32 at the articulated shaft 91.

The leg members 31, 32 of the apparatus are advantageously fitted in the chassis of the trailer 1 so that the wheels 9a, 9b of the bogie 9 are at least partly outside the bottom part of the trailer chassis 1 while the leg members are in the high position A (see figure 3).

The trailer of the invention is operated as follows. Let us assume that the vehicle-trailer combination of figure 1 is without the load 12. In order to perform the loading, the trailer 1 must be brought to the loading position of figure 2. At the beginning, the support legs 3 located at the rear end of the trailer are in the high position A, and the bogie 2 is located at the rear end 1a of the trailer. While starting the loading process, into the hydraulic cylinders 4, 5 of the leg members 31, 32 of the support legs 3 there is conducted pressurized hydraulic fluid, in which case the pistons of the cylinders are thrusted out and the leg members 31, 32 start to turn from the high position A in the vicinity of the chassis of the trailer 1 down around the articulation point 6. When the bogies 9 located at the free ends 31a, 32a of the leg members 31, 32 of the apparatus rest firmly against the ground, the supply of the hydraulic fluid to the cylinders 4, 5 is stopped, whereafter the rear bogie 2 can be driven to the front end of the trailer 1 by means of a shifting device 14. At the end of the shifting motion, the bogie 2 pushes the tractor 11 away from under the trailer 1, whereafter the rear end 1a of the trailer 1 is lowered down by means of the support legs 3. Thereafter the device 13 for shifting the load to the support of the trailer 1 is moved from the front end of the trailer to the rear end, whereafter it can be fastened to the container 12 as is illustrated in figure 2. Thereafter the container 12 is drawn, by means of the device 13, to the support of the trailer, and the above described working steps are repeated in the opposite order as for the bogie 2 and the support legs 3.

By means of the apparatus, the rear end 1a of the trailer 1 can be lifted somewhat higher than it is while resting against the rear bogie 2. On the other hand, the rear end 1a of the trailer can be lowered, after shifting the rear bogie, near to the ground surface by reducing the pressure in the hydraulic cylinders 4, 5 and by allowing the leg members 31, 32 to be turned around their fastening point 6 towards the rear end of the trailer. By changing the pressure in the hydraulic cylinders 4, 5 of only one leg member 31 or 32, the sideways inclination of the trailer can, if necessary, be adjusted for example in order to compensate possible unevenness in the underlaying surface. When the free ends 31a, 32a of the leg members 31, 32 are provided with bogies 9, the trailer can be moved by means of a tractor, or the trailer can be shifted to under a container while loading the container on the trailer.

## Claims

1. Supporting legs (3) for a trailer (1), comprising two elongate leg members (31, 32) which are attached to the rear end (1a) of the trailer so that each leg member (31, 32) is in the high position (A) at least roughly parallel to the lengthwise axis (C-C) of the trailer, and that each leg member is turnable around a horizontal axis perpendicular to the vehicle longitudinal axis by means of a turning device such as a pressure fluid cylinder (4, 5) and supported at its articulation points (6), from the high position (A) closely below the surface of the trailer chassis, to the low position (B) against the ground or other underlaying surface in order to raise and lower the rear end (1a) of the trailer, and which leg members (31, 32) are provided with wheel assemblies (9), **characterized** in that each leg member (31, 32) is at its articulation points (6) attached to such a distance from the rear end of the trailer that roughly corresponds to the total length (b) of the leg member, in which case the free end (31a, 32a) of the leg member, together with the connected wheel assembly (9), is in the high position (A) located in the immediate vicinity of the rear edge (1c) of the rear part (1a) of the trailer.

2. The trailer support legs of claim 1, **characterized** in that each leg member (31, 32) is arranged in the bevelled part (1c) of the rear end (1a) of the trailer.

3. The trailer support legs of claim 1 or 2, **characterized** in that the turning device of the support legs (3), particularly a pressure fluid cylinder (4, 5) is located on the opposite side of the articulation point (6) of the trailer, with respect to the leg member (3).

4. The trailer support legs of claim 3, **characterized** in that the second articulation point (7) of the pressure fluid cylinder (4, 5), which articulation point is connected to the support legs (3), is located at a distance (a) from the articulation point (6) of the leg members (31, 32) and above the said point while the leg members (31, 32) are in the high position (A).

5. The trailer support legs of claim 4, **characterized** in that the distance (a) between the articulation points (6, 7) is essentially shorter than the total length (b) of the leg member (31, 32).

6. The trailer support legs of claim 3 or 5, **characterized** in that the pressure fluid cylinders (4, 5) and the respective leg members (31, 32) are in the high position (A) located successively and in a direction at least roughly parallel.

7. The trailer support legs of claim 2 or 3, **characterized** in that the free end (31a, 32a) of each leg member (31, 32) is arranged to be supported against the trailer (1) in the high position (A).

8. The trailer support legs of claim 7, **characterized** in that at the rear end (1a) of the trailer, there are arranged support members (8), against which each leg member (31, 32) is arranged to be supported in the high position (A).

9. The trailer support legs of claim 2 or 3, **characterized** in that at the free end (31a, 32a) of each leg member, there is turnably attached a bogie (9).

10. The trailer support legs of claim 9, **characterized** in that the wheels (9a, 9b) of the bogie (9) are at least partly located outside the bottom part of the trailer chassis while the leg members (31, 32) are in the high position (A).

## Patentansprüche

1. Stütze (3) für einen Anhänger (1) mit zwei länglichen Stützelementen (31, 32), die an dem hinteren Ende (1a) des Anhängers derart angebracht sind, daß jedes Stützelement (31, 32) in der oberen Stellung (A) wenigstens annähernd parallel zur Längsachse (C-C) des Anhängers verläuft, und daß jedes Stützelement mittels einer Dreheinrichtung, wie beispielsweise einem Fluiddruckzylinder (4, 5) und an seinen Gelenkpunkten (6) gelagert um eine horizontale Achse senkrecht zu der Fahrzeuglängsachse aus der oberen Stellung (A) nahe unterhalb der Oberfläche der Anhängerchassis zu der unteren Stellung (B) auf den Boden oder eine andere Unterlageflache zum Anheben und Absenken des hinteren Endes (1a) des Anhängers drehbar ist, wobei die Stützelemente (31, 32) mit Radaufbauten (9) versehen sind,
**dadurch gekennzeichnet,**
daß jedes Stützelement (31, 32) um eine ungefähr der gesamten Länge (b) des Stützelements entsprechende Entfernung von dem hinteren Ende des Anhängers an seinen Gelenkpunkten (6) angebracht ist, wobei das freie Ende (31a, 32a) des Stützelements gemeinsam mit dem verbundenen Radaufbau (9) in der oberen Stellung (A) in unmittelbarer Nahe des hinteren Randes (1c) des hinteren Abschnitts (1a) des Anhängers befindet.

2. Anhängerstütze nach Anspruch 1, dadurch gekennzeichnet, daß jedes Stützelement (31, 32) in dem abgeschrägten Abschnitt (1c) des hinteren Endes (1a) des Anhangers angeordnet ist.

3. Anhängerstütze nach Anspruch 1 oder 2, dadurch gekennzeichnet, daß die Dreheinrichtung der Stütze (3), insbesondere ein Fluiddruckzylinder (4, 5) bezüglich des Stützelements (3) auf der gegenüberliegenden Seite des Gelenkpunktes (6) des Anhängers angeordnet ist.

4. Anhängerstütze nach Anspruch 3, dadurch gekennzeichnet, daß der zweite Gelenkpunkt (7) des Fluiddruckzylinders (4, 5), der mit der Stütze (3) verbunden ist, in einem Abstand (a) von dem Gelenkpunkt (6) der Stützelemente (31, 32) und oberhalb dieses Gelenkpunktes angeordnet, wenn sich die Stützelemente (31, 32) in der oberen Position (A) befinden.

5. Anhängerstütze nach Anspruch 4, dadurch gekennzeichnet, daß der Abstand (a) zwischen den Gelenkpunkten (6, 7) wesentlich kürzer als die Gesamtlänge (b) des Stützelements (31, 32) ist.

6. Anhängerstütze nach Anspruch 3 oder 5, dadurch gekennzeichnet, daß die Fluiddruckzylinder (4, 5) und die jeweiligen Stützelemente (31, 32) in der oberen Stellung (A) hintereinander und in einer wenigstens annähernd parallelen Richtung angeordnet sind.

7. Anhängerstütze nach Anspruch 2 oder 3, dadurch gekennzeichnet, daß das freie Ende (31a, 32a) jedes Stützelements (31, 32) in der oberen Position (A) gegen den Anhänger (1) abstützbar ist.

8. Anhängerstütze nach Anspruch 7, dadurch gekennzeichnet, daß an dem hinteren Ende (1a) des Anhängers Halteteile (8) angeordnet sind, gegen die jedes Stützelement (31, 32) in der oberen Position (A) haltbar ist.

9. Anhängerstütze nach Anspruch 2 oder 3, dadurch gekennzeichnet, daß an dem freien Ende (31a, 32a) jedes Stützelements ein Bogie (9) drehbar angebracht ist.

10. Anhängerstütze nach Anspruch 9, dadurch gekennzeichnet, daß die Räder (9a, 9b) des Bogies (9) wenigstens teilweise außerhalb des Bodenabschnitts der Anhängerchassis angeordnet sind, wenn sich die Stützelemente (31, 32) in der oberen position (A) befinden.

## Revendications

1. Bras support (3) pour une remorque (1), comportant deux éléments de bras allongés (31, 32) qui sont fixés à l'extrémité arrière (la) de la remorque de telle sorte que chaque élément de bras (31, 32) est, dans une position haute (A), au moins sensiblement parallèle à l'axe longitudinal (C-C) de la remorque, et que chaque élément de bras peut tourner autour d'un axe horizontal perpendiculaire à l'axe longitudinal du véhicule au moyen d'un dispositif de rotation tel qu'un vérin à pression de fluide (4, 5) et soutenu au niveau de ses points d'articulation (6), de la position haute (A) directement sous la surface du châssis de remorque, jusqu'à une position basse (B) contre le sol ou une autre surface sous-jacente afin de soulever et abaisser l'extrémité arrière (la) de la remorque, les éléments de bras (31, 32) étant pourvus d'ensembles de roues (9), caractérisés en ce que chaque élément de bras (31, 32) est, au niveau de ses points d'articulation (6), fixé à une distance de l'extrémité arrière de la remorque telle qu'elle correspond à peu près à la longueur totale (b) de l'élément de bras, auquel cas l'extrémité libre (31a, 32a) de l'élément de bras, avec l'ensemble de roues connecté (9), se trouve, dans la position haute (A), située immédiatement au voisinage du bord arrière (1c) de la partie arrière (1a) de la remorque.

2. Bras support de remorque selon la revendication 1, caractérisés en ce que chaque élément de bras (31, 32) est disposé dans une partie biseautée (1c) de l'extrémité arrière (1a) de la remorque.

3. Bras support de remorque selon la revendication 1 ou 2, caractérisés en ce que le dispositif de rotation des bras support (3), en particulier un vérin à pression de fluide (4, 5), se trouve sur le côté opposé du point d'articulation (6) de la remorque par rapport à l'élément de bras (3).

4. Bras support de remorque selon la revendication 3, caractérisés en ce que le deuxième point d'articulation (7) du vérin à pression de fluide (4, 5), dont le point d'articulation est relié aux bras support (3), se trouve à une distance (a) du point d'articulation (6) des éléments de bras (31, 32) et au-dessus dudit point lorsque les éléments de bras (31, 32) sont dans la position haute (A).

5. Bras support de remorque selon la revendication 4, caractérisés en ce que la distance (a) entre les points d'articulation (6, 7) est essentiellement plus courte que la longueur totale (b) de l'élément de bras (31, 32).

6. Bras support de remorque selon la revendication 3 ou 5, caractérisés en ce que les vérins à pression de fluide (4, 5) et les éléments de bras respectifs (31, 32) se trouvent dans la position haute (A) de manière successive et dans une direction au moins à peu près parallèle.

7. Bras support de remorque selon la revendication 2 ou 3, caractérisés en ce que l'extrémité libre (31a, 32a) de chaque élément de bras (31, 32) est disposé de façon à être supporté contre la remorque (1) dans la position haute (A).

8. Bras support de remorque selon la revendication 7, caractérisés en ce que des éléments de support (8) sont disposés au niveau de l'extrémité arrière (1a) de la remorque, et contre lesquels chaque élément de bras (31, 32) est prévu pour être supporté dans la position haute (A).

9. Bras support de remorque selon la revendication 2 ou 3, caractérisées en ce que un chariot (9) est supporté en rotation au niveau de l'extrémité libre (31a, 32a) de chaque élément de bras.

10. Bras support de remorque selon la revendication 9, caractérisés en ce que les roues (9a, 9b) du chariot (9) se trouvent au moins partiellement à l'extérieur de la partie inférieure du châssis de remorque lorsque les éléments de bras (31, 32) sont dans la position haute (A).
